(19) Europäisches Patentamt
European Patent Office
Office européen des brevets

(11) **EP 1 644 877 B1**

(12) **EUROPÄISCHE PATENTSCHRIFT**

(45) Veröffentlichungstag und Bekanntmachung des Hinweises auf die Patenterteilung:
**09.05.2007 Patentblatt 2007/19**

(51) Int Cl.:
*G06Q 10/00* *(2006.01)*   *B26D 5/00* *(2006.01)*

(21) Anmeldenummer: **04732544.4**

(86) Internationale Anmeldenummer:
**PCT/AT2004/000169**

(22) Anmeldetag: **13.05.2004**

(87) Internationale Veröffentlichungsnummer:
**WO 2004/102430 (25.11.2004 Gazette 2004/48)**

(54) **SCHNITTMUSTER-ERZEUGUNGSVERFAHREN, SCHNEIDEVERFAHREN UND SCHNEIDEVORRICHTUNG FÜR RECHTECKIGE ELEMENTE**

PATTERN GENERATING METHOD, CUTTING METHOD AND CUTTING DEVICE FOR RECTANGULAR ELEMENTS

PROCEDE DE PRODUCTION DE MODELES DE COUPE, PROCEDE DE COUPE ET DISPOSITIF DE COUPE POUR ELEMENTS RECTANGULAIRES

(84) Benannte Vertragsstaaten:
**AT BE BG CH CY CZ DE DK EE ES FI FR GB GR HU IE IT LI LU MC NL PL PT RO SE SI SK TR**

(30) Priorität: **14.05.2003 AT 7362003**

(43) Veröffentlichungstag der Anmeldung:
**12.04.2006 Patentblatt 2006/15**

(73) Patentinhaber:
• **Herzog, Christian**
  **8020 Graz (AT)**
• **Hohnhold, Oliver**
  **8430 Leitring (AT)**

(72) Erfinder:
• **Herzog, Christian**
  **8020 Graz (AT)**
• **Hohnhold, Oliver**
  **8430 Leitring (AT)**

(74) Vertreter: **Margotti, Herwig Franz et al**
**Kopecky & Schwarz**
**Patentanwälte**
**Wipplingerstrasse 32/22**
**1010 Wien (AT)**

(56) Entgegenhaltungen:
**US-A- 5 927 170**

• **COSTA M C: "UNE ETUDE PRATIQUE DE DECOUPES DE PANNEAUX DE BOIS" RAIRO. RECHERCHE OPERATIONNELLE, MONTREUIL, FR, Bd. 18, Nr. 3, 1. August 1984 (1984-08-01), Seiten 211-219, XP000747661 ISSN: 0399-0559**
• **GILMORE P C ET AL: "MULTISTAGE CUTTING STOCK PROBLEMS OF TWO AND MORE DIMENSIONS" OPERATIONS RESEARCH, BALTIMORE, MD, US, Bd. 13, 1965, Seiten 94-120, XP000749235**
• **MORABITO R ET AL: "STAGED AND CONSTRAINED TWO-DIMENSIONAL GUILLOTINE CUTTING PROBLEMS:AN AND/OR-GRAPH APPROACH" EUROPEAN JOURNAL OF OPERATIONAL RESEARCH, AMSTERDAM, NL, Bd. 94, Nr. 3, 8. November 1996 (1996-11-08), Seiten 548-560, XP000608076 ISSN: 0377-2217**

EP 1 644 877 B1

**Beschreibung**

Die Erfindung betrifft ein Verfahren zur Erzeugung eines aus rechteckigen Elementen bestehenden Schnittmusters für den Zuschnitt von platten- oder bahnförmigem Material unter optimierter Ausnutzung der zur Verfügung stehenden Fläche des platten- oder bahnförmigen Materials, wobei zunächst ein aus einer Vielzahl rechteckiger Elemente bestehender Auftrag definiert und die maximale Anzahl der möglichen Längsschnitte im Schnittmuster festgelegt wird.

Die Erfindung betrifft weiters ein Schneideverfahren zum Schneiden rechteckiger Elemente aus platten- oder bahnförmigem Material.

Die Erfindung betrifft schließlich eine Schneidevorrichtung zum Schneiden rechteckiger Elemente aus platten- oder bahnförmigem Material, insbesondere Blech, mit Zufuhrmitteln zum Zuführen von platten- oder bahnförmigem Material, zumindest einem verfahrbaren Querschneidemittel, einer Vielzahl von Längsschneidemitteln und einer Steuereinrichtung.

In Gewerbe und Industrie ist man häufig mit dem Problem konfrontiert, aus einem zur Verfügung stehenden Flachmaterial, wie z. Platten oder Bahnen, eine Vielzahl von Elementen mit vordefinierten Umrissen ausschneiden zu müssen. Dabei soll aus Kosten- und Materialersparnisgründen möglichst wenig Verschnitt entstehen, d.h. für die zu schneidenden Elemente soll ein optimiertes Schnittmuster auf diesem Flachmaterial gefunden werden, worauf im Anschluss daran diese Elemente gemäß dem ermittelten Schnittmuster ausgeschnitten werden.

Aus dem Dokument US 5,92'7,170 sind ein Verfahren und eine Vorrichtung zur Herstellung und zur Stapelung von Platten bekannt, die aus einem Bahnmaterial ausgeschnitten werden, wobei zumindest zwei Bahnabschnitte vorgegebener Breite aus dem Bahnmaterial ausgeschnitten werden.

Aus dem Dokument COSTA M C: "UNE ETUDE PRATIQUE DE DECOUPES DE PANNEAUX DE BOIS" RAIRO, RECHERCHE OPERATIONNELLE, MONTREUIL, FR, Bd. 18, Nr. 3, 1. August 1984 (1984-08-01), Seiten 211-219, XP000747661 ISSN: 0399-0559 ist ein Verfahren zur Erzeugung eines aus rechteckigen Elementen bestehenden Schnittmusters für den Zuschnitt von platten- oder bahnförmigem Material unter optimierter Ausnutzung der zu Verfügung stehenden Fläche des platten- oder bahnförmigen Materials bekannt. Bei diesem Verfahren wird zunächst ein aus einer Vielzahl rechteckiger Elemente bestehender Auftrag definiert und die maximale Anzahl der möglichen Längsschnitte im Schnittmuster festgelegt, wobei die rechteckigen Elemente in Streifen gleicher Breite sortiert werden.

Bei häufig wechselnden Aufträgen zum Ausschneiden von Elementen mit unterschiedlichen Umrissen und Größen und kleinen Stückzahlen wird ein solches Schnittmuster häufig von einem Arbeiter manuell durch Versuch und Irrtum und aus Erfahrungswerten ermittelt. Es versteht sich, dass eine solche Vorgehensweise je nach dem räumlichen Vorstellurrgsvermögen des Arbeiters sehr unterschiedliche und so gut wie nie optimale Ergebnisse liefert. Darüber hinaus bringt die manuelle Erstellung solcher Schnittmuster einen beträchtlichen Zeitaufwand mit sich. Es besteht daher ein Bedürfnis nach einem Verfahren zur automatischen Erstellung von Schnittmustern für das Schneiden unterschiedlich geformter und dimensionierter Elemente aus Flachmaterial.

Die vorliegende Erfindung löst diese Aufgabe für rechteckige Elemente durch ein Schnittmuster-Erzeugungsverfahren gemäß den kennzeichnenden Merkmalen des Anspruchs 1 und ein Schneideverfahren zum Schneiden rechteckiger Elemente aus platten- oder bahnförmigem Material gemäß den Merkmalen des Anspruchs 9. Vorteilhafte Ausgestaltungen des erfindungsgemäßen Schnittmuster-Erzeugungsverfahren sind in den Unteransprüchen dargelegt.

Die Erfindung stellt weiters eine Schneidevorrichtung zum Schneiden rechteckiger Elemente aus platten- oder bahnförmigem Material gemäß den kennzeichnenden Merkmalen des Anspruchs 10 bereit. Mit dieser Schneidevorrichtung kann das erfindungsgemäße Schneideverfahren äußerst effizient eingesetzt werden.

Durch das erfindungsgemäße Schnittmuster-Erzeugungsverfahren und Schneideverfahren können verschiedenste rechteckige Elemente unterschiedlichster Längen und Breiten in einer Weise auf einem Flachmaterial angeordnet werden, die geringste Materialverluste des Flachmaterials durch Verschnitt mit sich bringt. Das Verfahren kann hervorragend automatisiert werden, beispielsweise durch Verwendung von Computern und/oder speicherprogrammierbaren Automatisierungssteuerungen. Weiters eignet sich dieses Schnittmuster-Erzeugungsverfahren und Schneideverfahren hervorragend für den Zuschnitt von Bahnmaterial, das in Rollenform geliefert wird und bei dem eine vorgegebene Zahl von Längsmessern und zumindest ein Messer für Querschnitte verwendet wird.

Eine weitere Verbesserung des erfindungsgemäßen Schnittmuster-Erzeugungsverfahrens ergibt sich, wenn bei der Sortierung der rechteckigen Elemente in Streifen gleicher Breite nicht-quadratische Elemente sowohl längs- als auch querliegend, d.h. in zwei Streifen, deren Breite einmal der Breite der Elemente und einmal ihrer Länge entsprechen, erfasst werden. Dadurch erhöht sich der Freiheitsgrad bei der Sortierung einzelner Elemente.

Geschwindigkeitssteigerungen bei der Abarbeitung des erfindungsgemäßen Schnittmuster-Erzeugungsverfahrens erzielt man durch Vorsortierung, indem beim Ermitteln jener Elemente eines Streifens, die hintereinander angeordnet die geringste Differenz zu einer vorgegebenen Soll-Länge ergeben, die Elemente in absteigender Länge angeordnet werden. Wird bei der Abarbeitung des Verfahrens festgestellt, dass ein Element nicht mehr innerhalb der Soll-Länge angeordnet werden kann, so kann man durch diese Vorsortierung rekursiv versuchen, das jeweils nächstkürzere Element einzupassen. Für eine weitere Geschwindigkeitssteigerung bei der Abarbeitung des Verfahrens können die einzelnen Element-Streifen auch nach absteigender Breite sortiert werden.

Um die Anzahl der erforderlichen Iterationsschritte bei der Ermittlung eines Teilauftrages nicht unnötig hoch werden zu lassen, dennoch aber ein Platzierungsergebnis mit äußerst geringen Verschnitten zu erhalten, kann weiters vorgesehen werden, die Verkürzung der Soll-Länge gemäß einer vorgegebenen Schrittweite, oder um die Länge des kürzesten Elementes im Auftrag, oder gemäß dem kleineren aus vorgegebener Schrittweite und Länge des kürzesten Elementes im Auftrag vorzunehmen. Allgemein gilt, dass möglichst große Teilaufträge gefunden werden sollen, um die notwendigen Verstellungen der Längsmesser zu minimieren, die zur Vorbereitung zunächst einen Schnitt über die gesamte Breite des Flachmaterials erfordern, wobei zumeist durch verschiedene Längen der Element-Streifen ein Verschnitt anfällt

Damit beim nachfolgenden Schneiden des ermittelten Schnittmusters möglichst wenige Verstellungen der Längsmesser erforderlich sind, ist es günstig, wenn Teil-Schnittmuster mit Streifen gleicher Breite im Gesamt-Schnittmuster hintereinander platziert werden, gegebenenfalls unter Umreihung einzelner Streifen innerhalb von Teil-Schnittmustern.

Oftmals muss beim Zuschnitt rechteckiger Elemente nur eine Mindestbreite eingehalten werden, wogegen das Überschreiten dieser Mindestbreite innerhalb gewisser Grenzen tolerierbar ist. Man benötigt somit einen Längsschnitt weniger, wenn schmale Randbereiche, die sich aus der Differenz zwischen der Breite des platten- oder bahnförmigen Materials und der Breite des Schnittmusters ergeben, dem äußersten Streifen im Schnittmuster hinzugefügt werden.

Die Erfindung wird nun anhand von nicht einschränkenden Ausführungsbeispielen unter Heranziehung der Zeichnungen näher erläutert.

In den Zeichnungen zeigen Fig. 1 eine erfindungsgemäße Schneidevorrichtung in der Perspektive, Fig. 2 ein Beispiel für eine Benutzeroberfläche eines Steuergeräts, das zur Abarbeitung des erfindungsgemäßen Schnittmuster-Erzeugungsverfahrens verwendet wird, und die Figuren 3A bis 3H eine Abfolge des Ablaufes des erfindungsgemäßen Schnittmuster-Erzeugungsverfahrens anhand eines Auftrages aus sechs, teils unterschiedlichen rechteckigen Elementen.

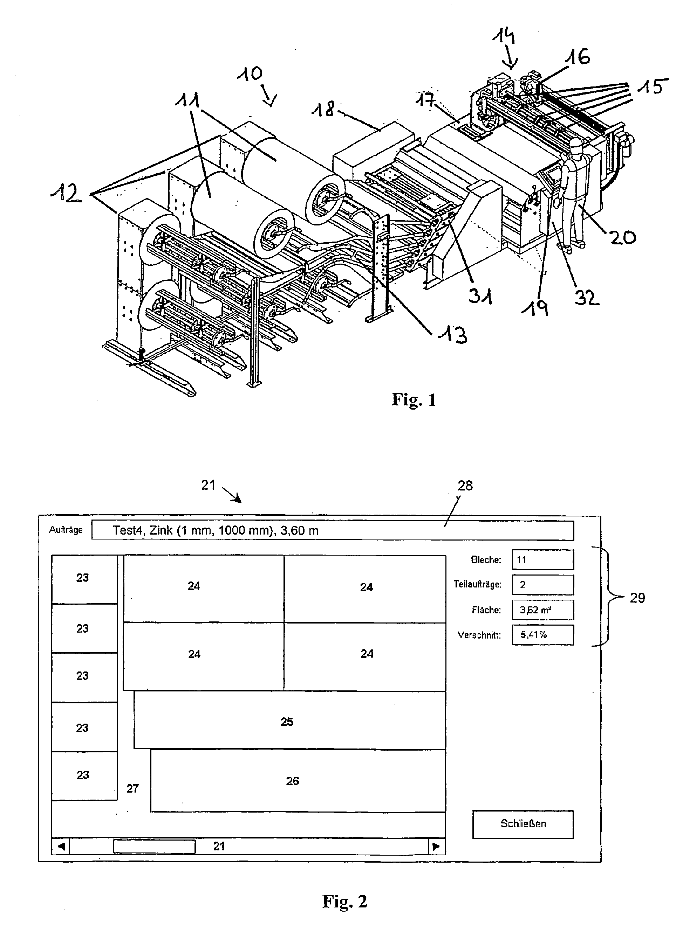

Zunächst auf Fig. 1 Bezug nehmend ist darin eine erfindungsgemäße Schneidevorrichtung 10 in der Perspektive dargestellt. Diese Schneidevorrichtung ist zum Schneiden von verschiedenen Blechen ausgebildet, die sich durch unterschiedliche Materialien oder Stärken voneinander unterscheiden können. Die Bleche liegen in diesem Ausführungsbeispiel in Form von Rollen 11 vor, die auf Haspeln 12 gehalten werden, könnten aber genauso gut in Plattenform vorliegen. Die Bleche werden von den Rollen 11 abgespult und als Bahnen 13 mittels einer Vorschubeinrichtung 31 zu einer Schneideeinheit 14 zugeführt. Die Schneideeinheit 14 umfasst in diesem Ausführungsbeispiel fünf Längsmesser 15 und ein quer zur Vorschubrichtung der Bleche verfahrbares Quermesser 16. Mit den fünf Längsmessern 15 kann eine zugeführte Blechbahn 13 in bis zu sechs Streifen geschnitten werden. Mit dem Quermesser 16 kann ein Schnitt quer über die gesamte Blechbahn 13 geführt werden. Dieser Querschnitt wird auch als "Nullschnitt" bezeichnet. Stromaufwärts von der Schneideeinheit 14 befindet sich eine Richteinheit 17, mit der die zugeführte Blechbahn exakt ausgerichtet werden kann. In einem Schaltschrank 18 sind die elektrischen Versorgungs-, Steuer- und Antriebseinheiten der Schneidevorrichtung 10 untergebracht. In diesem Schaltschrank 18 können sich auch eine nicht näher dargestellte speicherprogrammierbare Steuerung (SPS) und/oder ein Computer befinden, mit denen das erfindungsgemäße Schnittmuster-Erzeugungsverfahren und das erfindungsgemäße Schneideverfahren abgearbeitet werden. Alternativ dazu ist ein Steuergerät 32 vorgesehen, das als SPS und/oder Computer ausgebildet ist. Eine Bedienperson 20 gibt über ein Steuerpult 19, das als Benutzerinterface zwischen der Bedienperson 20 und der dient, die erforderlichen Daten, insbesondere die Maße der aus der Blechbahn 13 zu schneidenden rechteckigen Elemente ein und erhält von der SPS oder dem Computer laufend Informationen über die zu bearbeitenden Schneide-Aufträge.

In Fig. 2 ist ein Beispiel für eine Benutzeroberfläche 21 dargestellt, wie sie an dem Steuerpult 19 angezeigt werden kann. Diese Benutzeroberfläche 21 umfasst ein Fenster 22, in dem ein Auftrag zum Schneiden von insgesamt elf Blechen visualisiert ist. Dieser Auftrag umfasst zwei Teilaufträge, wobei ein erster Teilauftrag aus dem Schneiden von fünf gleich großen, nebeneinander angeordneten Blechen 23 besteht, und der zweite Teilauftrag aus dem Schneiden von vier gleich großen Blechen 24 und zwei weiteren Blechen 25, 26 besteht. Zwischen den beiden Teilaufträgen erkennt man eine freie Blechfläche 27, die als Verschnitt anfällt. Der Vorschub der Bleche erfolgt im Bild von links nach rechts. Die Benutzeroberfläche umfasst weiters ein Auftragsfenster 28, in dem alle eingegebenen Aufträge erkennbar sind, und Statusinformationen 29 über den gerade bearbeiteten Auftrag.

Wieder auf Fig. 1 Bezug nehmend ist es eine weitere Aufgabe der Bedienperson 20, nach Abarbeitung eines Teilauftrags die Längsmesser 15 auf die erforderlichen Positionen für den nächsten Teilauftrag einzustellen. Alternativ dazu kann die Verstellung der Längsmesser 15 auch automatisch vorgenommen werden.

Es besteht nun das Problem, die verschiedenen Blechelemente, die durch ihre Länge und Breite definiert sind, so auf der Blechbahn 13 zu platzieren, dass möglichst wenig Verschnittmaterial anfällt. Die Anzahl der Blechelemente ist dabei variabel. Das Schnittmuster wird durch die vorgegebene Breite der Blechbahn begrenzt, wobei die Länge der Blechbahn bei Rollenmaterial in erster Näherung als unendlich angenommen werden kann. In der Praxis wird aber selbstverständlich die von einer Rolle abgewickelte Blechlänge gemessen und bei der Errechnung eines Teilauftrags berücksichtigt, ob die Restlänge noch ausreichend für die Abarbeitung des Teilauftrags ist. Bei Plattenmaterial muss die Plattenlänge immer berücksichtigt werden. Mit den fünf Längsmessern 15 können maximal sechs Streifen geschnitten werden, wobei nicht alle Längsmesser gleichzeitig verwendet werden müssen, so dass auch weniger Streifen erzeugbar sind. Es sei weiters angenommen, dass die Breitenverstellung der zu schneidenden Streifen, d.h. die Verstellung der Längsmesser nur dann durchgeführt werden kann, wenn kein Blechmaterial zwischen den Längsmessern vorhanden ist. Schnitte mit dem Quermesser 16 können aber an beliebigen Positionen und Streifen erfolgen und müssen nicht über die gesamte Breite der Blechbahn geführt werden. Der erfindungsgemäßen Lösung zum Erzeugen eines Schnittmusters mit möglichst geringem Verschnitt liegt auch der Gedanke zugrunde, den Auftrag, das ist die Summe aller zu schneidenden Blechelemente, in möglichst große Teilaufträge zu zerlegen, um die notwendigen Längsmesserverstellungen zu minimieren, da bei jeder Messerverstellung ein Schnitt über die gesamte Breite der Blechbahn 13 durchgeführt wird und dabei zumeist aufgrund der unterschiedlichen Längen der zu schneidenden Streifen ein Verschnitt anfällt. Ebenso soll die vorhandene Breite des Materials bestmöglich ausgenutzt werden, ohne die Maximalanzahl an Längsschnitten zu überschreiten, die durch die vorhandenen Längsmesser vorgegeben ist.

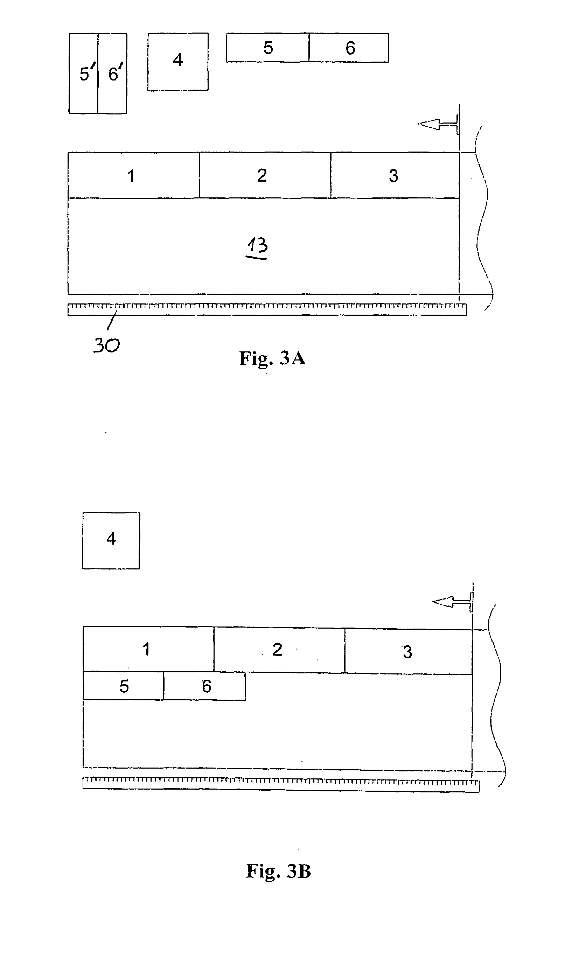

Nachfolgend wird nun der Ablauf des erfindungsgemäßen Schnittmuster-Erzeugungsverfahrens anhand der Abfolge der Figuren 3A bis 3H näher erläutert. Dabei soll ein Auftrag, der aus sechs aus der Blechbahn 13 zu schneidenden rechteckigen Elementen besteht, abgearbeitet werden. Der Auftrag ist in der folgenden Tabelle aufgelistet:

| Stückzahl | Länge [mm] | Breite [mm] | Bezugsnummer |
| --- | --- | --- | --- |
| 3 | 900 | 320 | 1, 2, 3 |
| 1 | 400 | 400 | 4 |
| 2 | 560 | 200 | 5, 6 |

Zunächst werden die rechteckigen Elemente 1 - 6 des Auftrags vorsortiert, indem sie in Streifen gleicher Breite 1-3; 5, 6; 4; 5', 6' sortiert werden, wie in Fig. 3A gezeigt. In diesem Ausführungsbeispiel sind die Elemente innerhalb der gebildeten Streifen gleich lang, ansonsten wäre es zweckmäßig, zusätzlich die Elemente innerhalb jedes Streifens nach absteigender Länge zu sortieren. Es ist auch zu beachten, dass die rechteckigen Elemente 5, 6 zweifach in Streifen gleicher Breite erfasst wurden, nämlich einmal längsliegend (Bezugszeichen 5, 6), und ein zweites Mal als querliegende Elemente 5', 6'. In der folgenden Beschreibung werden querliegende Elemente mit ihrer Bezugsnummer und einem Apostroph bezeichnet. Die rechteckigen Elemente 1-3 sind deshalb nicht als querliegend sortierte Elemente zu sehen, da sie bereits auf der Blechbahn platziert wurden.

Nach der geschilderten Sortierung wird jener Streifen ermittelt und der Länge nach in einem Teil-Schnittmuster auf der Blechbahn platziert, dessen Elemente oder eine Teilanzahl davon hintereinander angeordnet die geringste Differenz zu einer vorgegebenen Soll-Länge ergeben. Da die Blechbahn von einer Rolle zugeführt wird, kann in diesem Beispiel die Länge der Blechbahn mit unendlich angenommen werden, so dass sich dieser Schritt des Verfahrens darauf beschränkt, den längsten Streifen zu ermitteln. Dies ist der Streifen mit den Elementen 1, 2, 3, der nun von an einem Längsrand der Blechbahn in deren Längsrichtung auf der Bahn platziert wird, wie ebenfalls in Fig. 3A dargestellt. Zur Verdeutlichung der Längenverhältnisse ist neben der Blechbahn 13 ein Lineal 30 abgebildet.

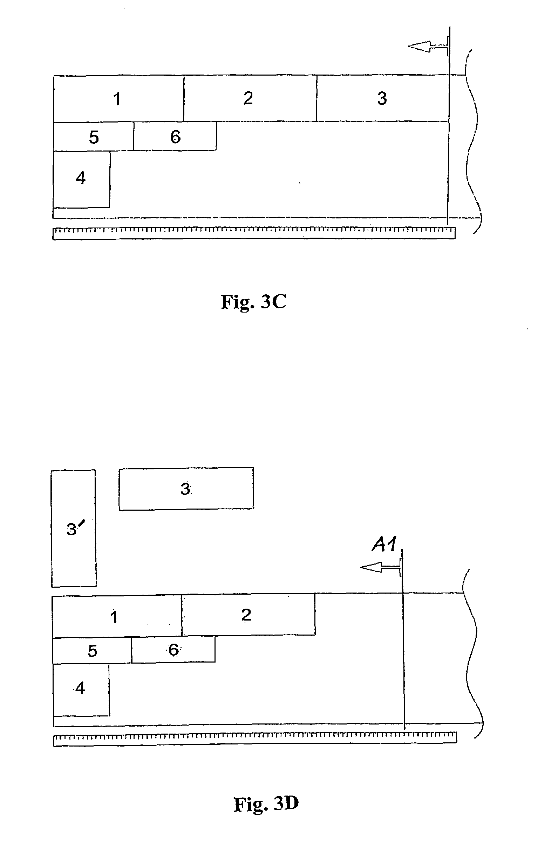

Dieser Schritt des Ermittelns des längsten verfügbaren Streifens und seiner Platzierung auf der Blechbahn wird nun wiederholt, solange noch Streifen zu Verfügung stehen, wobei die Streifen Längskante an Längskante liegend auf der Blechbahn platziert werden. Man erkennt in Fig. 3B, dass der zweitlängste Streifen jener mit den Elementen 5, 6 ist, die daher neben dem Streifen mit den Elementen 1-3 auf der Blechbahn platziert werden. Es ist zu beachten, dass durch die Platzierung der Elemente 5, 6 auf der Blechbahn auch die ein zweites Mal erfassten Elemente 5', 6' aus dem Auftrag entfernt werden müssen, so dass als letzter anzuordnender Streifen jener verbleibt, der nur aus dem quadratischen Element 4 besteht. Dieses Element 4 wird nun ebenfalls auf der Blechbahn 13 platziert, wie in Fig. 3C zu sehen. Es sollte erwähnt werden, dass bei der Platzierung der Streifen stets berücksichtigt werden muss, ob die Summe der Breiten aller ermittelten Streifen die Breite des platten- oder bahnförmigen Materials nicht übersteigt würde und ob die Anzahl der für die ermittelten Streifen erforderlichen Längsschnitte nicht größer als die maximale Anzahl möglicher Längsschnitte ist.

Somit wurde der gesamte Auftrag in einem einzigen Teil-Schnittmuster (= Teilauftrag) platziert und es wird nun der relativer Verschnitt dieses Teil-Schnittmusters gemäß der Formel:

$$\text{relativer Verschnitt} = \frac{\text{Breite des Materials x Soll-Länge} - \Sigma \text{ Elementflächen}}{\Sigma \text{ Elementflächen}}$$

errechnet und das Ergebnis zwischengespeichert. Wäre bereits zuvor ein Teil-Schnittmuster berechnet worden, so würde nun das Ergebnis des relativen Verschnitts des aktuellen Teil-Schnittmusters mit dem zuvor ermittelten Teil-Schnittmuster verglichen werden und jenes Teil-Schnittmuster mit dem geringeren Verschnitt zur weiteren Verwendung zwischengespeichert und das andere verworfen werden.

Im nächsten Verfahrensschritt wird nun die Soll-Länge des Teilschnittmusters um einen vorgegebenen Betrag verkürzt, wie durch Pfeil A1 dargestellt, und es wird nun wie oben beschrieben ein neues Teil-Schnittmuster ermittelt, wie in Fig. 3D dargestellt. Man erkennt in Fig. 3D, dass das Element 3 im ersten Streifen keinen Platz mehr innerhalb der neuen Soll-Länge hat und somit aus dem ersten Streifen entfernt worden ist. Das Element 3 steht nun zur erneuten Platzierung zur Verfügung, und es wird auch wieder doppelt erfasst, das heißt, einmal längsliegend (Bezugszeichen 3) und einmal als querliegendes Element 3'. Trotz des Entfernens des Elements 3 aus dem ersten Streifen ist dieser unter den vorhandenen Streifen noch immer der längste und bleibt deshalb in seiner Position auf der Blechbahn. Die Berechnung des relativen Verschnitts ergibt, dass das nunmehrige Teil-Schnittmuster gegenüber jenem von Fig. 3C den geringeren Verschnitt aufweist, und wird daher als das bisher beste Teil-Schnittmuster beibehalten.

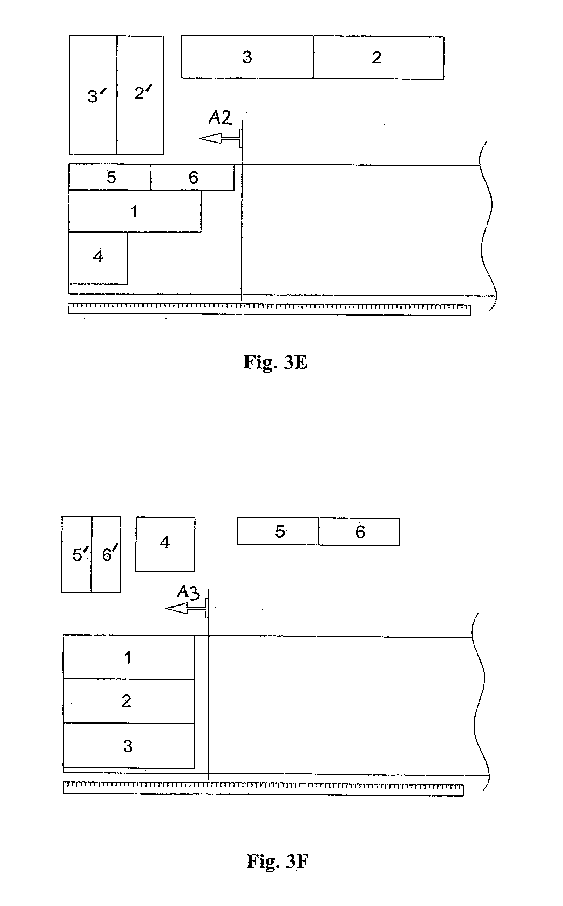

Dies ändert sich erst nach wiederholter Verkürzung der Soll-Länge des Teil-Schnittmusters, wie in Fig. 3E dargestellt, in der die Soll-Länge das durch Pfeil A2 repräsentierte Maß erreicht hat, bei dem nun auch das Element 2 aus dem ersten Streifen herausfällt und zur weiteren Platzierung ebenfalls doppelt, nämlich längsliegend (Bezugszeichen 2) und querliegend (Bezugszeichen 2') erfasst wird. Nunmehr ist der Streifen mit den Elementen 5, 6 der längste und wird folglich an der Längskante der Blechbahn platziert, gefolgt vom Streifen, der aus dem Element 1 besteht, und dem Streifen, der aus dem Element 4 besteht. Die Elemente 2, 3 bzw. 2', 3' müssten in dieser Konfiguration in einem späteren Teil-Schnittmuster angeordnet werden.

Bei noch weiterer Verkürzung der Soll-Länge, wie durch Pfeil A3 in Fig. 3F dargestellt, fällt auch das Element 6 aus seinem Streifen heraus und es ergeben sich als neue, am besten in die Soll-Länge passende Streifen drei gleich lange Streifen, die jeweils aus einem Element 1, 2, 3 bestehen. Man erkennt, dass der Verschnitt bei dieser Konfiguration bereits sehr gering ist. Weiters erkennt man, dass nunmehr die Elemente 4, 5, 6 und die doppelt erfassten Elemente 5', 6' zur Platzierung anstehen. Wenn die Elemente 1, 2, 3 nicht gleich breit, sondern unterschiedlich breit wären, würden sie nach der Breite sortiert, beginnend mit dem breitesten auf der Blechbahn angeordnet werden, um sicherzustellen, dass der verbleibende seitliche Verschnitt (Längsrand) minimal ist. Dies ist dann von Bedeutung, wenn nicht alle vorhandenen gleich langen Streifen bzw. Elemente nebeneinander platziert werden können, ohne die Breite der Blechbahn zu überschreiten.

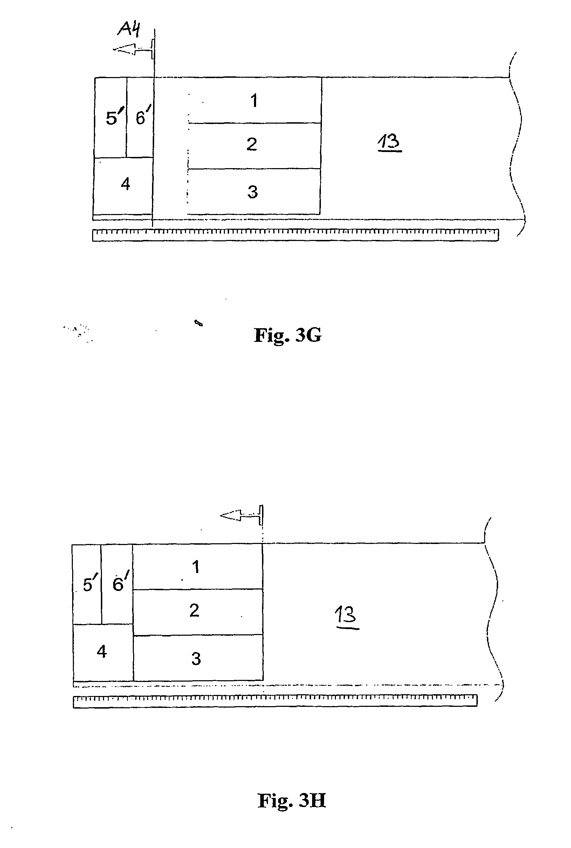

Bei wiederum weiter verkürzter Soll-Länge, dargestellt durch Pfeil A4 in Fig. 3G, fallen alle drei Streifen aus den Elementen 1, 2, 3 aus dem Teilschnitt-Muster heraus und es ergeben sich zwei neue Streifen, von denen einer aus den querliegenden Elementen 5', 6' besteht, und der zweite Streifen aus dem Element 4 besteht. Man erkennt, dass der Verschnitt bei dieser Konfiguration gleich gering ist wie bei dem Teil-Schnittmuster von Fig. 3F. Die Elemente 1, 2, 3 sind in Fig. 3G bereits als separater Teilauftrag dargestellt.

Nunmehr wird die Soll-Länge noch weiter verkleinert, bis sie die Länge des kürzesten aller Elemente erreicht hat, das sind im vorliegenden Fall die querliegenden Elemente 5' oder 6'. Das sich dadurch ergebende Teilschnittmuster würde nur mehr einen Streifen mit einem Element (5' oder 6') umfassen, da zwei nebeneinanderliegende Elemente 5' und 6' die Breite der Blechbahn übersteigen würden. Es ist leicht nachvollziehbar, dass dieses Teil-Schnittmuster einen höheren relativen Verschnitt aufweist als jene gemäß der Figuren 3F oder 3G und daher zu verwerfen ist. Aus diesem Grund ist dieses Teil-Schnittmuster auch nicht zeichnerisch dargestellt.

Man erhält daher als optimales Schnittmuster ein Muster, das aus zwei Teil-Schnittmustern besteht, wie in Fig. 3G im Abstand voneinander und in Fig. 3H als endgültiges Ergebnis aneinander anschließend dargestellt. Gemäß diesem Schnittmuster kann nun in der Schneidevorrichtung 10 von Fig. 1 die zur Schneideeinheit 14 zugeführte Blechbahn 13 geschnitten werden, wobei zum Schneiden des ersten Teil-Schnittmusters, bestehend aus einem Streifen mit den Elementen 5', 6', und einem zweiten Streifen aus dem Element 4 nur zwei Längsmesser 15 erforderlich sind: Die anderen Längsmesser werden für diesen Schneidevorgang in eine Parkposition gebracht. Mit dem Quermesser 16 wird zwischen den Elementen 5', 6' ein Querschnitt durchgeführt, der jedoch nicht über die gesamte Breite der Blechbahn geführt wird, sondern nur über die Länge der Elemente 5', 6'. Nach dem Schneiden des ersten Teil-Schnittmusters wird mit dem Quermesser 16 ein Schnitt quer über die gesamte Blechbahn 13 geführt und im Anschluss daran drei Längsmesser 15 zum Schneiden des zweiten Teil-Schnittmusters positioniert, das aus drei Streifen mit jeweils einem Element 1, 2, 3 besteht. Das Schneiden des zweiten Teil-Schnittmusters wird durch einen weiteren Querschnitt mit dem Quermesser 16 über die gesamte Blechbahn abgeschlossen. Optional, und falls eine Überbreite von Elementen zulässig ist, brauchen die Elemente 4 und 3 an ihrer freien Längskante nicht geschnitten werden, sondern kann der schmale Rest der Blechbahn an diesen Elementen verbleiben.

Eine Postoptimierung zur möglichst geringen Anzahl an Längsmesserverstellungen, indem Teil-Schnittmuster mit Streifen gleicher Breite im Gesamt-Schnittmuster hintereinander platziert werden, wobei gegebenenfalls noch eine Umreihung einzelner Streifen innerhalb der Teil-Schnittmuster erfolgt, führt beim vorliegenden Ausführungsbeispiel nicht zum Erfolg, da die beiden Teil-Schnittmuster keine gleich breiten Streifen aufweisen.

**Patentansprüche**

1. Verfahren zur Erzeugung eines aus rechteckigen Elementen bestehenden Schnittmusters für den Zuschnitt von platten- oder bahnförmigem Material unter optimierter Ausnutzung der zur Verfügung stehenden Fläche des platten- oder bahnförmigen Materials, wobei zunächst ein aus einer Vielzahl rechteckiger Elemente bestehender Auftrag definiert und die maximale Anzahl der möglichen Längsschnitte im Schnittmuster festgelegt wird, wobei

   a) die rechteckigen Elemente (1-6) in Streifen gleicher Breite sortiert werden, wobei vorzugsweise die Elemente innerhalb dieses Streifens zusätzlich nach absteigender Länge sortiert werden;
   **dadurch gekennzeichnet, dass**
   b) jener Streifen ermittelt und der Länge nach in einem Teil-Schnittmuster platziert wird, dessen Elemente oder eine Teilanzahl davon hintereinander angeordnet die geringste Differenz zu einer vorgegebenen Soll-Länge ergeben, wobei dieser Schritt unter Nebeneinander-Platzierung der ermittelten Streifen im Schnittmuster für weitere Streifen wiederholt wird, solange noch Streifen vorhanden sind und die Summe der Breiten aller ermittelten Streifen die Breite des platten- oder bahnförmigen Materials (13) nicht übersteigt und die Anzahl der für die ermittelten Streifen erforderlichen Längsschnitte nicht größer als die maximale Anzahl möglicher Längsschnitte ist;
   c) der Verschnitt für das erhaltene Teil-Schnittmuster errechnet wird, vorzugsweise definiert als relativer Verschnitt gemäß der Formel:

$$\text{relativer Verschnitt} = \text{Verschnittfläche} / \Sigma \text{ Elementflächen,}$$

   wobei gilt:

$$\text{Verschnittfläche} = \text{Breite des Materials} \times \text{Soll-Länge} - \Sigma \text{ Elementflächen}$$

   d) der Verschnitt des aktuellen Teil-Schnittmusters mit dem zuvor ermittelten Teil-Schnitimuster - soweit vorhanden - verglichen und jenes Teil-Schnittmuster mit dem geringeren Verschnitt zur weiteren Verwendung zwischengespeichert und das andere verworfen wird;
   e) die Soll-Länge um einen vorgegebenen Betrag verkürzt und ein neues Teil-Schnittmuster nach den obigen Schritten b - d ermittelt wird, solange die Soll-Länge nicht kleiner als die Länge des kürzesten aller Elemente ist;
   f) das resultierende Teil-Schnittmuster mit dem geringsten Verschnitt in ein Gesamt-Schnittmuster, gegebenenfalls an bereits vorhandene Teil-Schnittmuster anschließend, übernommen und die in diesem Teil-Schnittmuster enthaltenen Elemente aus dem Auftrag entfernt werden;
   g) für die im Auftrag verbliebenen Elemente die Schritte b - f zur Ermittlung weiterer Teil-Schnittmuster mit geringstem Verschnitt wiederholt werden, solange der Auftrag noch Elemente enthält und die Gesamtlänge des platten- oder bahnförmigen Materials nicht überschritten wird.

2. Schnittmuster-Erzeugungsverfahren nach Anspruch 1, **dadurch gekennzeichnet, dass** bei der Sortierung der rechteckigen Elemente in Streifen gleicher Breite nicht-quadratische Elemente (1-3, 5, 6) sowohl längs- als auch querliegend (2', 3', 5', 6'), d.h. in zwei Streifen, die ihrer Breite und ihrer Länge entsprechen, erfasst werden.

3. Schnittmuster-Erzeugungsverfahren nach Anspruch 1 oder 2, **dadurch gekennzeichnet, dass** beim Ermitteln jener Elemente eines Streifens, die hintereinander angeordnet die geringste Differenz zu einer vorgegebenen Soll-Länge ergeben, die Elemente in absteigender Länge angeordnet werden.

4. Schnittmuster-Erzeugungsverfahren nach Anspruch 3, **dadurch gekennzeichnet, dass**, wenn ein Element nicht mehr innerhalb der Soll-Länge angeordnet werden kann, rekursiv versucht wird, das jeweils nächstkürzere Element anzuordnen.

5. Schnittmuster-Erzeugungsverfahren nach einem der Ansprüche 1 bis 4, **dadurch gekennzeichnet, dass** die einzelnen Streifen nach absteigender Breite sortiert werden.

6. Schnittmuster-Erzeugungsverfahren nach einem der Ansprüche 1 bis 5, **dadurch gekennzeichnet, dass** die Verkürzung der Soll-Länge gemäß einer vorgegebenen Schrittweite, oder um die Länge des kürzesten Elementes im Auftrag, oder gemäß dem kleineren aus vorgegebener Schrittweite und Länge des kürzesten Elementes im Auftrag vorgenommen wird.

7. Schnittmuster-Erzeugungsverfahren nach einem der Ansprüche 1 bis 6, **dadurch gekennzeichnet, dass** Teil-Schnittmuster mit Streifen gleicher Breite im Gesamt-Schnittmuster hintereinander platziert werden, gegebenenfalls unter Umreihung einzelner Streifen innerhalb von Teil-Schnittmustern.

8. Schnittmuster-Erzeugungsverfahren nach einem der Ansprüche 1, bis 7, **dadurch gekennzeichnet, dass** schmale Randbereiche, die sich aus der Differenz zwischen der Breite des platten- oder bahnförmigen Materials und der Breite des Schnittmusters ergeben, dem äußersten Streifen (3, 4) im Schnittmuster hinzugefügt werden.

9. Schneideverfahren zum Schneiden rechteckiger Elemente aus platten- oder bahnförmigern Material, insbesondere Blech, umfassend:

   a) das Bereitstellen des platten- oder bahnförmigen Materials (13);
   b) das Bereitstellen einer Vielzahl verlagerbarer Längsmesser (15) zum Erzeugen von Längsschnitten im platten- oder bahnförmigen Material (13);
   c) das Bereitstellen zumindest eines verfahrbaren Quermessers (16) zum Erzeugen von Querschnitten im platten- oder bahnförmigen Material (13);
   **gekennzeichnet durch**:
   d) das Erzeugen eines Schnittmusters aus einem aus einer Vielzahl rechteckiger Elemente (1-6) bestehenden Auftrag gemäß einem der Ansprüche 1 bis 8;
   e) das Einrichten der Längsmesser (15) gemäß den Längsschnitt-Werten des ersten Teil-Schnittmusters des Schnittmusters;
   f) das Zuführen des platten- oder bahnförmigen Materials (13) zu den Längs- und Quermessern unter Verfahren des zumindest einen Quermessers (16) gemäß den Erfordernissen des ersten Teil-Schnittmusters;
   g) das Abschließen des ersten Teil-Schnittmusters mit dem Ausführen eines Querschnitts über die gesamte Breite des platten- oder bahnförmigen Materials (13);
   h) das Abarbeiten aller weiterer Teil-Schnittmusters gemäß den Schritten e - f.

10. Schneidevorrichtung (10) zum Schneiden rechteckiger Elemente (1-6) aus platten- oder bahnförmigern Material (13), insbesondere Blech, mit Zufuhrmitteln (31) zum Zuführen des platten- oder bahnförmigen Materials (13), zumindest einem verfahrbaren Querschneidemittel (16), einer Vielzahl von Längsschneidemitteln (15) und einer Steuereinrichtung (32), **dadurch gekennzeichnet, dass** die Steuereinrichtung (32) betreibbar ist, Schnittmuster gemäß dem Verfahren nach einem der Ansprüche 1 bis 8 zu erzeugen und zumindest das Querschneidemittel (16), vorzugsweise auch die Längsschneidemittel (15), gemäß dem erzeugten Schnittmuster zu verstellen und die Zufuhrmittel (31) zu steuern und die Steuereinrichtung dazu ein entsprechendes Programm gespeichert hat.

**Claims**

1. A method of generating a pattern consisting of rectangular elements for tailoring a plate-shaped or sheet-like material, with the available surface of the plate-shaped or sheet-like material being utilized in an optimized manner, wherein, at first, a batch consisting of a plurality of rectangular elements is defined and the maximum number of possible longitudinal cuts in the pattern is determined, wherein

   a) the rectangular elements (1-6) are sorted into strips of equal widths, with the elements within said strip preferably being graded, in addition, according to decreasing lengths;

**characterized in that**

b) the strip is identified whose elements or a partial quantity thereof, being consecutively arranged, produce the smallest difference from a predetermined nominal length, and said strip is placed lengthwise in a partial pattern, whereby this step is repeated for further strips, with the identified strips being placed side by side in the pattern, for as long as strips are still available and the sum of the widths of all the identified strips does not exceed the width of the plate-shaped or sheet-like material (13) and the number of the longitudinal cuts required for the identified strips is not greater than the maximum number of possible longitudinal cuts;

c) the waste for the obtained partial pattern is calculated, preferably defined as relative waste according to the formula:

$$\text{relative waste} = \text{waste surface} / \Sigma \text{ element surfaces},$$

whereby the following applies:

$$\text{waste surface} = \text{width of the material} \times \text{nominal length} - \Sigma \text{ element surfaces}$$

d) the waste of the current partial pattern is compared to the previously determined partial pattern - if available - and the partial pattern having less waste is stored temporarily for further use and the other one is discarded;

e) the nominal length is shortened by a predetermined amount and a new partial pattern is determined as per the above-indicated steps b - d for as long as the nominal length is not smaller than the length of the shortest one among all the elements;

f) the resulting partial pattern having the least amount of waste is incorporated into a total pattern, optionally adjacent to already existing partial patterns, and the elements contained in said partial pattern are removed from the batch;

g) the steps b - f are repeated for the elements remaining in the batch in order to determine further partial patterns having the least possible amount of waste for as long as the batch still contains elements and the total length of the plate-shaped or sheet-like material is not exceeded.

2. A pattern generating method according to claim 1, **characterized in that**, when sorting the rectangular elements into strips of equal widths, non-quadratic elements (1-3, 5, 6) are detected in a longitudinal as well as in a transverse position (2', 3', 5', 6'), i.e., in two strips which correspond to their width and their length.

3. A pattern generating method according to claim 1 or 2, **characterized in that**, when identifying the elements of a strip which, being consecutively arranged, produce the smallest difference from a predetermined nominal length, the elements are arranged according to decreasing lengths.

4. A pattern generating method according to claim 3, **characterized in that**, if an element can no longer be placed within the nominal length, it is attempted in a recursive manner to arrange the respective next-shorter element.

5. A pattern generating method according to any of claims 1 to 4, **characterized in that** the individual strips are graded according to decreasing widths.

6. A pattern generating method according to any of claims 1 to 5, **characterized in that** the shortening of the nominal length is performed according to a predetermined step size or by the length of the shortest element in the batch, or according to the smaller one of the predetermined step size and the length of the shortest element in the batch.

7. A pattern generating method according to any of claims 1 to 6, **characterized in that** partial patterns having strips of equal widths are placed one after another in the total pattern, whereby, optionally, several strips within the partial patterns are rearranged.

8. A pattern generating method according to any of claims 1 to 7, **characterized in that** narrow edge regions resulting from the difference between the width of the plate-shaped or sheet-like material and the width of the pattern are added to the outermost strip (3, 4) in the pattern.

9. A cutting method for cutting rectangular elements from a plate-shaped or sheet-like material, in particular sheet metal, comprising:

a) providing the plate-shaped or sheet-like material (13);
b) providing a plurality of displaceable longitudinal knives (15) for generating longitudinal cuts in the plate-shaped or sheet-like material (13);
c) providing at least one moveable transverse knife (16) for generating transverse cuts in the plate-shaped or sheet-like material (13);
**characterized by**:
d) manufacturing a pattern from a batch consisting of a plurality of rectangular elements (1-6) according to any of claims 1 to 8;
e) adjusting the longitudinal knives (15) according to the longitudinal cut values of the first partial pattern of the pattern;
f) supplying the plate-shaped or sheet-like material (13) to the longitudinal and transverse knives, the at least one transverse knife (16) being moved according to the requirements of the first partial pattern;
g) finishing the first partial pattern by performing a transverse cut across the entire width of the plate-shaped or sheet-like material (13);
h) processing all further partial patterns according to steps e - f.

10. A cutting device (10) for cutting rectangular elements (1-6) from a plate-shaped or sheet-like material (13), in particular sheet metal, comprising feeding means (31) for supplying the plate-shaped or sheet-like material (13), at least one moveable cross-cutting means (16), a plurality of longitudinal cutting means (15) and a control device (32), **characterized in that** the control device (32) is operable so as to produce patterns according to the method according to any of claims 1 to 8 and to adjust at least the cross-cutting means (16), preferably also the longitudinal cutting means (15), according to the generated pattern and to control the feeding means (31) and that, for this purpose, the control device has an appropriate program in its memory.

**Revendications**

1. Procédé de production d'un modèle de coupe constitué d'éléments rectangulaires pour la découpe d'un matériau en forme de plaque ou de panneau avec une utilisation optimisée de la surface disponible du matériau en forme de plaque ou de panneau, dans lequel un lot constitué d'une pluralité d'éléments rectangulaires est d'abord défini et le nombre maximal de coupes longitudinales possibles dans le modèle de coupe est déterminé, dans lequel

a) les éléments rectangulaires (1-6) sont triés en bandes de largeur égale, les éléments à l'intérieur de ces bandes étant, de préférence, triés, en plus, en fonction de leur longueur décroissante ;
**caractérisé en ce que**
b) on détermine la bande dont les éléments ou une quantité partielle de ceux-ci placés les uns derrière les autres donnent la différence la plus faible par rapport à une longueur de consigne prédéterminée et on la place dans un modèle de coupe partiel en fonction de la longueur, cette étape étant répétée pour d'autres bandes en plaçant les bandes déterminées les unes à côté des autres dans le modèle de coupe aussi longtemps que des bandes sont encore présentes et que la somme des largeurs de toutes les bandes déterminées ne dépasse pas la largeur du matériau en forme de plaque ou de panneau (13) et que le nombre de coupes longitudinales nécessaires pour les bandes déterminées n'est pas supérieur au nombre maximal de coupes longitudinales possibles ;
c) on calcule les chutes pour le modèle de coupe partiel obtenu, de préférence définies comme chutes relatives suivant la formule :

$$\text{chutes relatives} = \text{surface de chutes} / \Sigma \text{ surfaces d'éléments,}$$

où :

$$\text{surface de chutes} = \text{largeur de matériau} \times \text{longueur de consigne} - \Sigma \text{ surfaces d'éléments}$$

d) on compare les chutes du modèle de coupe partiel réel au modèle de coupe partiel déterminé au préalable - s'il existe - et on entrepose le modèle de coupe partiel qui présente les chutes les plus réduites pour une utilisation ultérieure et on rebute l'autre ;

e) on raccourcit la longueur de consigne d'une grandeur prédéterminée et on détermine un nouveau modèle de coupe partiel suivant les étapes b-d ci-dessus aussi longtemps que la longueur de consigne n'est pas inférieure à la longueur du plus courts de tous les éléments;

f) on reprend le modèle de coupe partiel résultant qui présente les chutes les plus réduites dans un modèle de coupe global, éventuellement adjacent à des modèles de coupe partiels déjà présents, et on enlève les éléments contenus dans ce modèle de coupe partiel du lot ;

g) pour les éléments restés dans le lot, on répète les étapes b-f pour déterminer d'autres modèles de coupe partiels présentant les chutes les plus réduites aussi longtemps que le lot contient encore des éléments et que la longueur totale du matériau en forme de plaque ou de panneau n'est pas dépassée.

2. Procédé de production d'un modèle de coupe selon la revendication 1, **caractérisé en ce que**, lors du triage des éléments rectangulaires en bandes de largeur égale, on détecte les éléments non carrés (1-3, 5, 6) disposés aussi bien longitudinalement que transversalement (2', 3', 5', 6'), c'est-à-dire en deux bandes qui correspondent à leur largeur et à leur longueur.

3. Procédé de production d'un modèle de coupe selon la revendication 1 ou 2, **caractérisé en ce que**, lors de la détermination des éléments d'une bande qui, placés les uns derrière les autres, donnent la différence la plus faible par rapport à une longueur de consigne prédéterminée, les éléments sont disposés en fonction de leur longueur décroissante.

4. Procédé de production d'un modèle de coupe selon la revendication 3, **caractérisé en ce que**, lorsqu'un élément ne peut plus être placé dans les limites de la longueur de consigne, on essaie de placer l'élément immédiatement plus court de manière récursive.

5. Procédé de production d'un modèle de coupe selon l'une quelconque des revendications 1 à 4, **caractérisé en ce que** les bandes individuelles sont triées en fonction de leur largeur décroissante.

6. Procédé de production d'un modèle de coupe selon l'une quelconque des revendications 1 à 5, **caractérisé en ce que** le raccourcissement de la longueur de consigne est réalisé en fonction d'un incrément prédéterminé ou représente la longueur de l'élément le plus court dans le lot, ou en fonction de l'incrément les plus petit des incréments prédéterminés au préalable et représente la longueur de l'élément le plus court dans le lot.

7. Procédé de production d'un modèle de coupe selon l'une quelconque des revendications 1 à 6, **caractérisé en ce que** les modèles de coupe partiels avec des bandes de largeur égale sont placés les uns derrière les autres dans le modèle de coupe global, éventuellement en plaçant à la suite les bandes individuelles à l'intérieur de modèles de coupe partiels.

8. Procédé de production d'un modèle de coupe selon l'une quelconque des revendications 1 à 7, **caractérisé en ce que** l'on ajoute à la bande la plus à l'extérieur (3, 4) dans le modèle de coupe des zones marginales étroites qui résultent de la différence entre la largeur du matériau en forme de plaque ou de panneau et la largeur du modèle de coupe.

9. Procédé de coupe pour couper des éléments rectangulaires constitués d'un matériau en forme de plaque ou de panneau, en particulier de la tôle, comprenant :

a) la fourniture du matériau en forme de plaque ou de panneau (13) ;

b) la fourniture d'une pluralité de couteaux longitudinaux déplaçables (15) pour former des coupes longitudinales dans le matériau en forme de plaque ou de panneau (13) ;

c) la fourniture d'au moins un couteau transversal déplaçable (16) pour former des coupes transversales dans le matériau en forme de plaque ou de panneau (13);

**caractérisé par** :

d) la formation d'un modèle de coupe à partir d'un lot constitué d'une pluralité d'éléments rectangulaires (1-6) selon l'une quelconque des revendications 1 à 8;

e) le réglage des couteaux longitudinaux en fonction des valeurs de coupe longitudinale (15) du premier modèle de coupe partiel du modèle de coupe ;

f) l'amenée du matériau en forme de plaque ou de panneau (13) aux couteaux longitudinaux et transversaux en déplaçant le au moins un couteau transversal (16) déplaçable en fonction des exigences du premier modèle de coupe partiel ;

g) la séparation du premier modèle de coupe partiel en réalisant une coupe sur toute la largeur du matériau en forme de plaque ou de panneau (13) ;

h) l'usinage de tous ils autres modèles de coupe partiels suivant les étapes e-f.

10. Dispositif de coupe (10) pour couper des éléments rectangulaires (1-6) constitués d'un matériau en forme de plaque ou de panneau (13), en particulier de la tôle, avec des moyens d'amenée (31) pour l'amenée du matériau en forme de plaque ou de panneau (13), au moins un moyen de coupe transversal déplaçable (16), une pluralité de moyens de coupe longitudinaux (15) et un dispositif de commande (32), **caractérisé en ce que** le dispositif de commande (32) peut fonctionner pour former des modèles de coupe selon le procédé selon l'une quelconque des revendications 1 à 8 et pour déplacer au moins le moyen de coupe transversal (16), de préférence également les moyens de coupe longitudinaux (15), en fonction du modèle de coupe formé et pour commander les moyens d'amenée (31) et **en ce que**, pour cela, le dispositif de commande a mémorisé un programme approprié.

**Fig. 1**

| Aufträge | Test4, Zink (1 mm, 1000 mm), 3,60 m |

Bleche: 11

Teilaufträge: 2

Fläche: 3,62 m²

Verschnitt: 5,41%

Schließen

**Fig. 2**

Fig. 3A

Fig. 3B

**Fig. 3C**

**Fig. 3D**

**Fig. 3E**

**Fig. 3F**

A4

5' 6'

4

1

2

3

13

**Fig. 3G**

5' 6'

4

1

2

3

13

**Fig. 3H**